# DEMANDE DE BREVET EUROPEEN

(11) **EP 2 386 995 A1**
(43) Date de publication de la demande: **16.11.2011**
(21) Numéro de dépôt: 11165488.5
(22) Date de dépôt: 10.05.2011
(51) Int. Cl.: G06Q 30/00

(54) **Procédé d'identification d'une sous-zone d'une zone géographique**

(30) Priorité: 11.05.2010 FR 1053644
(71) Demandeur: CBS Outdoor, 92130 Issy Les Moulineaux (FR)
(72) Inventeur: Lauriat, Vincent, 91400, ORSAY (FR); Rousseau, Christophe, 60280, MARGNY LES COMPIEGNE (FR); Le Levier, Anne, 92300, LEVALLOIS PERRET (FR); Massard, Virginie, 92100, BOULOGNE BILLANCOURT (FR)
(74) Mandataire: Leszczynski, André

(57) **Abrégé**

La présente invention concerne un procédé d'identification d'une sous-zone d'une zone géographique mis en oeuvre à l'aide d'un système informatique (1) comportant au moins un écran (4), caractérisé par le fait qu'il comporte les étapes suivantes:
- soumettre à une base de données (6) une requête portant sur au moins un critère prédéfini à satisfaire dans la sous-zone,
- recevoir de la base de données (6) les coordonnées de la sous-zone satisfaisant le critère prédéfini et
- afficher sur l'écran (4) une représentation cartographique et/ou photographique faisant apparaître la sous-zone,

au moins un critère concernant le rapport entre le pourcentage d'individus ayant un profil donné et se déplaçant dans la sous-zone pendant une période donnée et le pourcentage d'individus ayant ledit profil au sein de la zone géographique.

## Description

La présente invention a pour objet un procédé d'identification d'une sous-zone d'une zone géographique satisfaisant au moins un critère prédéfini, ainsi qu'un produit programme d'ordinateur pour la mise en oeuvre d'un tel procédé.

L'invention se rapporte plus particulièrement à la détermination d'emplacements pour des panneaux publicitaires de contenu fixe ou variable.

L'Affimétrie réalise périodiquement des enquêtes de déplacements permettant de savoir le nombre de personnes se déplaçant dans des tronçons donnés d'une agglomération. Au sens de la présente invention, on désigne par « tronçon. » la partie d'une route, étant par exemple une rue, une avenue, un boulevard ou une allée, située entre deux intersections routières. Six millions de tronçons sont répertoriés par l'Affimétrie.

Le résultat de ces enquêtes est transmis aux annonceurs de publicité sous la forme de trois fichiers distincts.

Un premier fichier recense le profil des individus sur lesquels a porté l'enquête, ce profil comprenant par exemple des informations telles que le sexe, l'âge ou encore la profession des individus, par exemple.

Un deuxième fichier recense les déplacements en tant que tel, c'est-à-dire les heures auxquelles les déplacements sont effectués, ainsi qu'éventuellement les moyens de transport utilisé pour les déplacements.

Un troisième fichier concerne la liste des tronçons empruntés lors de chaque déplacement. Ce troisième fichier contient environ 300 millions de données.

Lorsqu'un annonceur souhaite positionner des panneaux publicitaires et/ou choisir le contenu d'une publicité adapté à un emplacement publicitaire, il peut utiliser un moteur de calcul mis à disposition par l'Affimétrie pour connaître le nombre d'individus se déplaçant dans un tronçon et/ou leur profil. Le temps de réponse de ce moteur de calcul est d'une minute environ, ce qui rend son exploitation relativement peu pratique. En outre, l'exploitation des trois fichiers de l'Affimétrie peut ne pas être très simple.

On connaît du document « New Ways to Sell Outdoor » Outdoor Advertising Magazine de Mars-Avril 1993, Vol. 2, n° 2 un procédé d'identification d'une sous-zone d'une zone géographique mis en oeuvre à l'aide d'un système informatique, dans lequel pour adapter une carte pour faire ressortir certains critères on soumet à une base de données une requête portant sur au moins un critère prédéfini à satisfaire dans la sous-zone, on reçoit de la base de données les coordonnées de la sous-zone satisfaisant le critère prédéfini et, on affiche une représentation faisant apparaître la sous-zone. Un publicitaire peut ainsi identifier quels sont les panneaux d'affichage les mieux positionnés par rapport à une cible donnée.

On connaît par ailleurs de WO 2006/029022 un procédé permettant de déterminer l'efficacité vis-à-vis du public de moyens publicitaires visibles depuis un tronçon de route. A l'issue d'une analyse, on obtient un résultat sous forme de matrice. On n'obtient pas de représentation cartographique et/ou photographique d'une sous-zone satisfaisant à un critère.

La présente invention a pour objet un procédé d'identification d'une sous-zone d'une zone géographique mis en oeuvre à l'aide d'un système informatique comportant au moins un écran, caractérisé par le fait qu'il comporte les étapes suivantes ;
- soumettre à une base de données une requête portant sur au moins un critère prédéfini à satisfaire dans la sous-zone,
- recevoir de la base de données les coordonnées de la sous-zone satisfaisant le critère prédéfini et,
- afficher sur l'écran une représentation cartographique et/ou photographique faisant apparaître la sous-zone,
au moins un critère concernant le rapport entre le pourcentage d'individus ayant un profil donné et se déplaçant dans la sous-zone pendant une période donnée et le pourcentage d'individus ayant ledit profil au sein de la zone géographique.

Selon l'invention, un utilisateur peut simplement visualiser quelles sont les sous-zones de la zone géographique satisfaisant le ou les critères prédéfinis sur l'écran du système informatique.

Les déplacements effectués à pied et/ou par tout moyen de transport, motorisé ou non, peuvent être recensés.

Le profil dépend par exemple du sexe de l'individu, et/ou de son âge, et/ou de sa profession et/ou de sa situation de famille.

En variante ou en combinaison de ce qui précède, le critère peut concerner le rapport entre le pourcentage d'individus ayant un profil donné et se déplaçant dans la sous-zone pendant une période donnée et le pourcentage d'individus ayant un tel profil au sein de la zone géographique. La prise en compte d'un tel critère peut permettre de savoir si ledit profil est sur- ou sous-représentée parmi les individus se déplaçant dans la sous-zone géographique considérée et d'adapter en conséquence le contenu publicitaire.

La base de données est par exemple unique. Cette base de données peut regrouper les trois fichiers précités élaborés par l'Affimétrie. Pour chaque sous-zone, le nombre d'individus se déplaçant pendant une période donnée et/ou leur profil peut être déjà calculé et enregistré dans la base de données, ce qui permet qu'un utilisateur reçoive de la base de données une réponse en quelques secondes seulement.

La zone géographique peut être une agglomération urbaine et la sous-zone géographique peut alors être un tronçon d'une route de ladite agglomération.

Le sens principal de déplacement le long d'un tronçon peut être affiché sur l'écran, ce qui permet de savoir de quelle manière disposer un panneau publicitaire le long du tronçon afin que ce dernier soit vu par le plus grand nombre d'individus se déplaçant dans ledit tronçon.

En réponse à la sélection sur l'écran par un utilisateur de la sous-zone, le nombre d'individus se déplaçant dans la sous-zone pendant une période donnée et/ou le pourcentage d'individus se déplaçant dans la sous-zone pendant ladite période et ayant un profil donné et/ou le rapport entre le pourcentage d'individus ayant ledit profil et se déplaçant dans la sous-zone pendant ladite période et le pourcentage d'individus ayant ledit profil au sein de la zone géographique peut être affiché.

L'affichage est effectué à l'aide des logiciels Google Earth^{®}et/ou Google Map^{®}.

L'utilisateur peut provoquer le basculement d'une représentation cartographique à une représentation photographique, voire vidéo, et vice-versa.

L'invention a encore pour objet, selon un autre de ses aspects, un produit programme d'ordinateur comportant des instructions lisibles par un système informatique comportant au moins un processeur et au moins un écran, ces instructions commandant le fonctionnement du système informatique de manière à ce que :
- une requête portant sur au moins un critère prédéfini à satisfaire dans au moins une sous-zone d'une zone géographique soit soumise à une base de données, le critère concernant le rapport entre le pourcentage d'individus ayant un profil donné et se déplaçant dans la sous-zone pendant une période donnée et le pourcentage d'individus ayant ledit profil au sein de la zone géographique,
- les coordonnées de la sous-zone satisfaisant le critère prédéfini soient reçues par le système informatique et,
- une représentation cartographique et/ou géographique faisant apparaître la sous-zone soit affichée sur l'écran du système informatique,

Le processeur est par exemple un microprocesseur.

L'invention pourra être mieux comprise à la lecture qui va suivre d'un exemple non limitatif de mise en oeuvre de celle-ci et à l'examen du dessin annexé sur lequel :
- la figure 1 représente de façon schématique un système pour la mise en oeuvre du procédé selon l'invention,
- les figures 2 à 6 sont des copies d'écran d'un terminal du système informatique illustrant différentes étapes du procédé selon l'invention,

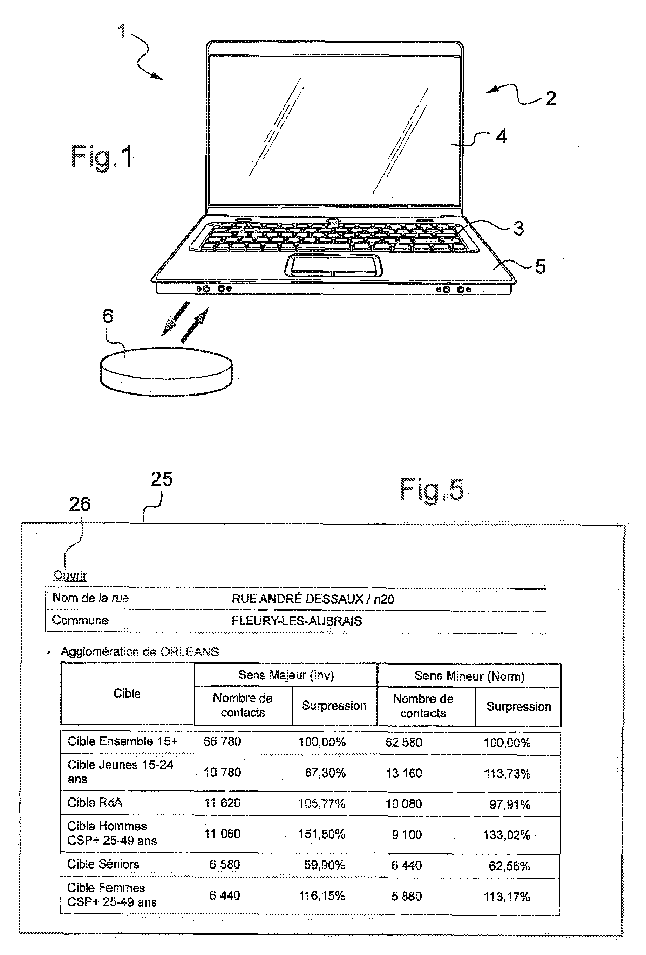

On a représenté de façon schématique à la figure 1 un système informatique 1 pour la mise en oeuvre d'un exemple de procédé selon l'invention. Ce système 1 comporte par exemple un terminal informatique 2 comportant une interface utilisateur avec un clavier 3 et un écran 4. Dans un autre exemple, le clavier est un clavier tactile.

Dans l'exemple de la figure 1, le terminal informatique 2 est un ordinateur portable mais l'invention n'est pas limitée à un type de terminal particulier. Le terminal informatique peut être un ordinateur, un assistant personnel numérique (PDA) ou tout type de téléphone intelligent (*SmartPhone*)*,* ou encore un appareil numérique pour écouter de la musique.

Le terminal informatique 2 peut communiquer avec une base de données 6 par une liaison filaire ou non, par exemple via un réseau informatique privé ou non, comme internet. La base de données 6 est par exemple unique et peut comporter pour tout ou partie des tronçons de route existant dans les agglomérations françaises le nombre d'individus se déplaçant dans le tronçon pendant une période donnée, par exemple une semaine, et/ou la correspondance du profil de ces individus avec des profils donnés. Ces informations sont par exemple enregistrées pour six millions de tronçons de route repartis dans les agglomérations françaises.

Le terminal 2 peut comporter un processeur 5 intégré ou non.

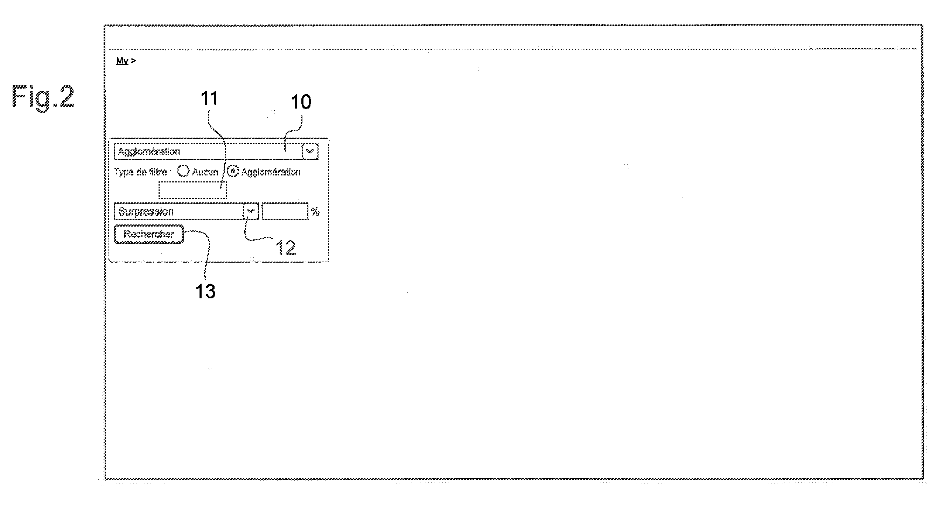

On va maintenant décrire en référence aux figures 2 à 5 des exemples d'étapes effectuées lorsqu'un utilisateur souhaite identifier un tronçon d'une agglomération à l'aide du système informatique 1.

Ces étapes sont par exemple mises en oeuvre lorsque des instructions d'un produit programme d'ordinateur sont lues par le processeur 5 du système informatique 2.

Lors d'une première étape représentée à la figure 2, un utilisateur peut choisir dans un menu déroulant 10 une agglomération dans lequel il souhaite disposer des panneaux publicitaires.

Lors de cette étape, l'utilisateur peut également saisir dans des champs 1: et 12 des critères en fonction desquels il souhaite effectuer l'identification de tronçon.

Le champ 11 permet par exemple de quantifier le nombre d'individus se déplaçant dans un tronçon de l'agglomération pendant une semaine et le champ 12 correspond par exemple à un menu déroulant permettant de sélectionner le rapport entre le pourcentage d'individus ayant un profil donné et se déplaçant dans le tronçon de l'agglomération pendant une semaine et le pourcentage d'individus ayant ledit profil au sein de l'agglomération, ce rapport étant encore appelé « surpression » par la suite.

L'utilisateur peut ensuite cliquer sur le champ 13 pour lancer la recherche.

Une requête visant à identifier dans l'agglomération le ou les tronçons satisfaisant les critères qui viennent d'être définis est alors envoyée à la base de données 6.

Cette requête peut, le cas échéant, transiter via un autre terminal informatique.

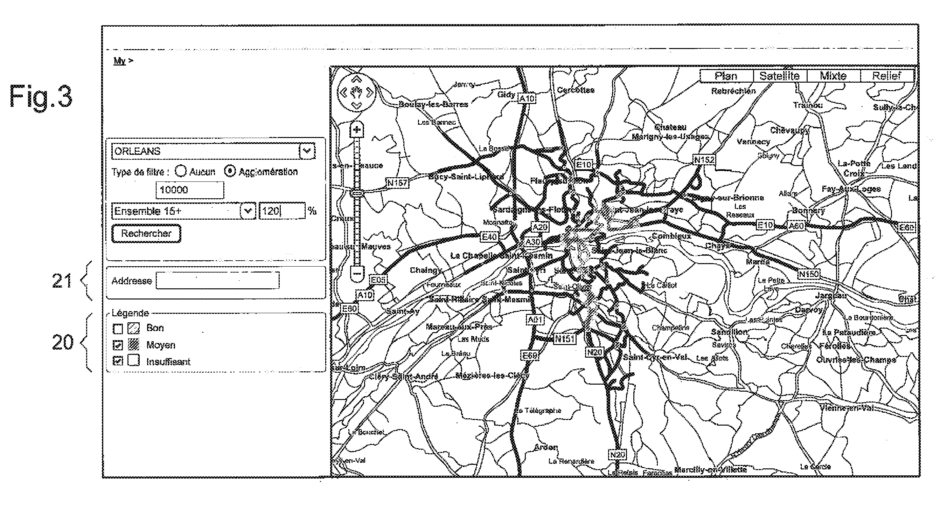

La base de données peut alors retourner au système informatique 1 les coordonnées du ou des tronçons de l'agglomération satisfaisant les critères saisis. Le résultat peut être visualisé sur l'écran 4 du terminal 2 à l'aide des outils cartographiques Google Map^{®} et/ou Map Server^{®}, comme représenté à la figure 3.

Dans le cas où Google Map^{®} est utilisé, des tronçons de l'agglomération recensés dans la base de données 6, par exemple tous les tronçons de l'agglomération recensés dans l'agglomération, viennent se superposer sur le fond de carte de Google Map^{®} pour l'agglomération et apparaissent en une couleur qui est fonction de la façon dont ils satisfont le ou les critères définis à l'étape représentée à la figure 2. Une légende 20 est par exemple affichée à côté de la représentation cartographique expliquant à quelle couleur est associée une performance. Des tronçons dans lesquels le nombre d'individus se déplaçant est supérieur à celui prédéfini précédemment peuvent ainsi être en une couleur différente de ceux pour lesquels le nombre prédéfini n'est pas atteint.

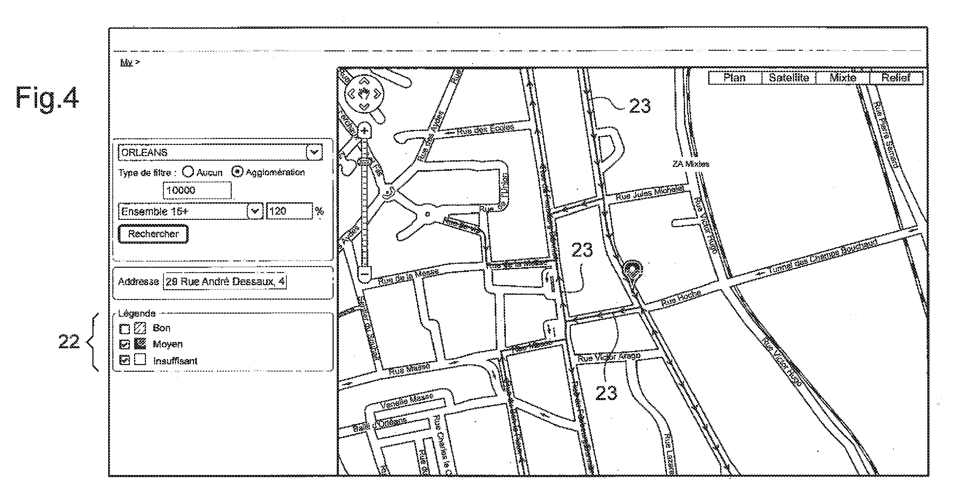

Afin de permettre d'afficher un nombre important de tronçons d'une même agglomération, le procédé selon l'invention peut également mettre en oeuvre, en plus de Google Earth^{®}, l'outil cartographique Google Map^{®} générant des images à partir de la base de données 6. Ces images sont par exemple des tronçons colorisés et orientés venant se superposer à la carte représentée à la figure 3, comme représenté sur la figure 4.

L'utilisateur peut sélectionner un tronçon particulier. Cette sélection peut s'effectuer en saisissant dans le champ 21 une adresse postale.

L'utilisateur peut alors observer sur l'écran du terminal informatique 2 la carte représentée sur la figure 4.

Comme on peut le voir, une légende 22, identique ou plus détaillée que celle de la figure 3, figure sur la carte représentée à la figure 4.

Pour chaque tronçon, des flèches 23 indiquent le sens principal de chaque tronçon, c'est-à-dire le sens selon lequel le plus grand nombre d'individus se déplace dans le tronçon.

L'utilisateur peut, s'il souhaite obtenir pour des tronçons affichés à la figure 4 des informations précises quant au nombre d'individus se déplaçant dans le tronçon et/ou la surpression de ce tronçon, cliquer sur le tronçon pour sélectionner ledit tronçon. Les coordonnées de la zone ainsi sélectionnées peuvent être transmises à Map Server^{®}. Les coordonnées transmises peuvent être analysées par le logiciel Map Serveur^{®}, qui peut interroger la base de données 6 et recevoir de celle-ci les informations de la base de données associées à ce tronçon.

Ces informations reçues peuvent ensuite être affichées sur l'écran du terminal informatique 2 sous la forme d'une bulle 25 représentée à la figure 5. Comme on peut le voir, six profils types ont été identifiés dans l'exemple considéré, à savoir les personnes de plus de 15 ans, les personnes dont l'âge est compris entre 15 et 24 ans, les hommes ou femmes au foyer, les hommes actifs, les femmes actives et les seniors. Grâce aux informations affichées dans la bulle 25, un annonceur peut déterminer pour chaque sens de déplacement dans le tronçon les profils des individus se déplaçant dans ledit tronçon et ainsi choisir des contenus publicitaires adaptés à ces individus.

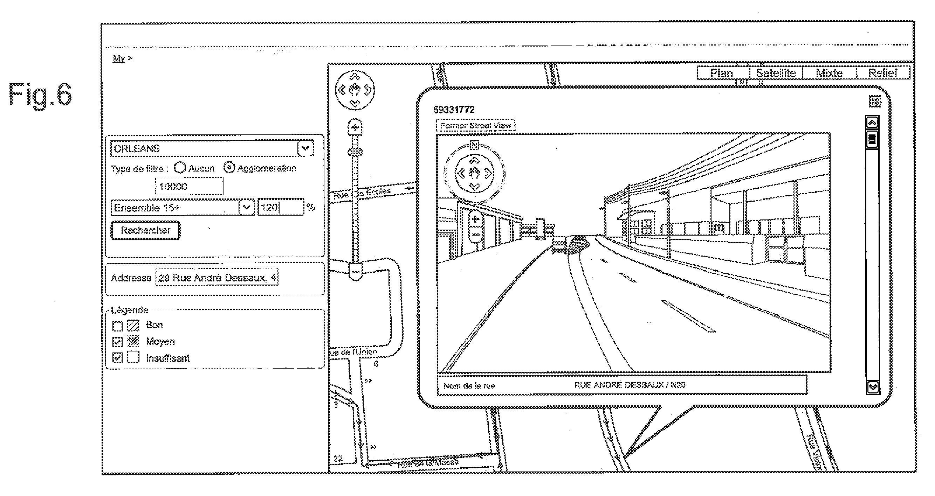

La bulle représentée à la figure 5 peut également comporter un lien 26 permettant de passer de la représentation cartographique de la figure 4 du tronçon sélectionné à une représentation photographique, voire vidéo, dudit tronçon, par exemple à l'aide de l'outil Street View^{®}, comme représenté à la figure 6. L'utilisateur peut ainsi voir s'afficher une photo prise à un emplacement du tronçon et/ou naviguer le long de ce tronçon.

L'invention n'est pas limitée aux exemples qui viennent d'être décrits.

## Revendications

1. Procédé d'identification d'une sous-zone d'une zone géographique mis en oeuvre à l'aide d'un système informatique (1) comportant au moins un écran (4), **caractérisé par le fait qu'**il comporte les étapes suivantes:
- soumettre à une base de données (6) une requête portant sur au moins un critère prédéfini à satisfaire dans la sous-zone,
- recevoir de la base de données (6) les coordonnées de la sous-zone satisfaisant le critère prédéfini et,
- afficher sur l'écran (4) une représentation cartographique et/ou photographique faisant apparaître la sous-zone,
au moins un critère concernant le rapport entre le pourcentage d'individus ayant un profil donné et se déplaçant dans la sous-zone pendant une période donnée et le pourcentage d'individus ayant ledit profil au sein de la zone géographique.

2. Procédé selon la revendication 1, **caractérisé par le fait qu'**un autre critère concerne le nombre d'individus se déplaçant dans la sous-zone pendant une période donnée.

3. Procédé selon la revendication 1 ou 2, **caractérisé par le fait qu'**un autre critère concerne le pourcentage d'individus se déplaçant dans la sous-zone pendant une période donnée et ayant un profil donné.

4. Procédé selon l'une quelconque des revendications 1 à 3, **caractérisé par le fait que** la base de données (6) est unique.

5. Procédé selon l'une quelconque des revendications 1 à 4, **caractérisé par le fait que** le nombre d'individus se déplaçant dans la sous-zone pendant ladite période et/ou leur profil sont déjà calculés et enregistrés dans la base de données (6).

6. Procédé selon l'une quelconque des revendications précédentes, **caractérisé par le fait que** la zone géographique est une agglomération urbaine et **par le fait que** la sous-zone géographique est un tronçon d'une route de ladite agglomération.

7. Procédé selon la revendication 6, **caractérisé par le fait que** l'on affiche sur l'écran (4) du système informatique le sens principal de déplacement le long d'un tronçon.

8. Procédé selon l'une quelconque des revendications précédentes, **caractérisé par le fait qu'**il comprend l'étape suivante:
- afficher sur l'écran (4), en réponse à la sélection sur l'écran par un utilisateur de la sous-zone, le nombre d'individus se déplaçant dans la sous-zone pendant ladite période et/ou le pourcentage d'individus se déplaçant dans la sous-zone pendant ladite période et ayant ledit profil et/ou le rapport entre le pourcentage d'individus ayant ledit profil et se déplaçant dans la sous-zone pendant ladite période et le pourcentage d'individus ayant ledit profil au sein de la zone géographique.

9. Produit programme d'ordinateur comportant des instructions lisibles par un système informatique (1) comportant au moins un processeur (5) et au moins un écran (4), ces instructions commandant le fonctionnement du système informatique (1) de manière à ce que :
- une requête portant sur au moins un critère prédéfini à satisfaire dans au moins une sous-zone d'une zone géographique soit soumise à une base de données (6), le critère concernant le rapport entre le pourcentage d'individus ayant un profil donné et se déplaçant dans la sous-zone pendant une période donnée et le pourcentage d'individus ayant ledit profil au sein de la zone géographique,
- les coordonnées de la sous-zone satisfaisant le critère prédéfini soient reçues par le système informatique (1) et,
- une représentation cartographique et/ou géographique faisant apparaître la sous-zone soit affichée sur l'écran (4) du système informatique (1).
